(19) Europäisches Patentamt / European Patent Office / Office européen des brevets

(11) **EP 1 831 046 B1**

(12) **FASCICULE DE BREVET EUROPEEN**

(45) Date de publication et mention
de la délivrance du brevet:
**18.02.2009 Bulletin 2009/08**

(21) Numéro de dépôt: **05824650.5**

(22) Date de dépôt: **08.12.2005**

(51) Int Cl.:
***B60W 10/10*** *(2006.01)*

(86) Numéro de dépôt international:
**PCT/FR2005/051061**

(87) Numéro de publication internationale:
**WO 2006/070145 (06.07.2006 Gazette 2006/27)**

(54) **PROCEDE ET DISPOSITIF DE CONTROLE DE SATURATION DU COUPLE MOTEUR THERMIQUE DANS UNE TRANSMISSION INFINIMENT VARIABLE A VARIATEUR ELECTRIQUE**

VERFAHREN UND VORRICHTUNG ZUR STEUERUNG DER VERBRENNUNGSMOTOR-DREHOMOMENTSÄTTIGUNG IN EINEM STUFENLOSEN GETRIEBE MIT ELEKTRISCHEM GANGWÄHLER

METHOD AND DEVICE FOR CONTROLLING HEAT ENGINE TORQUE SATURATION IN AN INFINITELY VARIABLE TRANSMISSION WITH ELECTRIC SPEED SELECTOR

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.12.2004 FR 0453144**

(43) Date de publication de la demande:
**12.09.2007 Bulletin 2007/37**

(73) Titulaire: **Renault SAS
92100 Boulogne Billancourt (FR)**

(72) Inventeurs:
• **POGNANT-GROS, Philippe
F-92500 Rueil Malmaison (FR)**
• **TURPIN, Thomas
F-91400 Orsay (FR)**
• **PICHON, Yves
F-92100 Boulogne Billancourt (FR)**

(56) Documents cités:
**EP-A- 1 255 175          WO-A-20/04106100
FR-A- 2 855 108**

## Description

La présente invention concerne la commande des transmissions infiniment variables àvariateur électrique.

Plus précisément, elle a pour objet procédé de contrôle d'une transmission infiniment variable à variateur électrique, comportant un moteur thermique et au moins deux machines électriques, reposant sur le calcul d'un point de fonctionnement instantané de la transmission défini par une référence de régime du moteur thermique et une référence de couple à la roue.

Cette invention s'applique sur un véhicule équipé d'un moteur thermique et d'une transmission infiniment variable à variateur électrique, qui présente la particularité de ne pas comporter de coupleur, embrayage ou convertisseur, entre le mot eur thermique et la transmission.

Elle trouve une application privilégiée, mais non limitative, sur un dispositif de transmission du type comprenant au moins deux voies parallèles de transmission de puissance, une voie contenant une chaîne cinématique à démult iplicat ion fixe, et une autre voie contenant un variateur de vitesse continu, composé de deux machines électriques. WO 2004/106100 A décrit un procédé conformement au préambule de la revendication 1.

Par la publicat ion FR 2 823 281, on connaît un dispositif du type indiqué ci-dessus, selon lequel les différentes voies sont connectées d'une part à un répartiteur mécanique d'entrée relié à une source d'énergie mécanique tel qu'un moteur thermique, et d'autre part à un répartiteur mécanique de sortie relié aux roues du véhicule. Les répartiteurs mécaniques d'entrée et de sortie, sont de préférence, mais non obligatoirement, des trains épicycloïdaux.

La transmission décrite dans cette publication comporte ainsi deux machines électriques reliées par un élément tampon d'énergie, intégrées dans une chaîne cinématique disposant de quatre arbres d'entrée et de sortie, respectivement connectés au moteur thermique, aux roues, et aux moteurs électriques.

Selon une disposit ion habituelle dans le domaine, une unité de calcul de transmission établit des consignes de commande pour chaque actionneur (les deux machines électriques, et éventuellement le moteur thermique), permettant de placer la transmission sur un point de fonctionnement déterminé par des modules de calculs appelés « couches supérieures de supervision ».

Comme indiqué plus haut, le point de f onct ionnement de la transmission peut être défini par une référence de régime du moteur thermique et une référence de couple à la roue. Dans ce cas, l'unité de calcul en charge d'établir les consignes de commande de chaque actionneur doit respect er des spécif icat ions de performance, et présenter des propriétés de robustesse aux perturbations et aux bruits de mesures, tout en assurant une régulat ion cor rect e de l'élément tampon d'énergie.

En particulier, la commande doit pouvoir s'adapter au cas fréquent où le moteur thermique rentre en saturation. Cela signifie que le couple demandé sur le vilebrequin est supérieur au couple maximal autorisé. Or, il arrive que, sur de fortes charges ou pour des calculs inexacts de point de fonctionnement, la commande calculée fasse saturer le moteur thermique. Dans ce cas, le point de fonctionnement désiré n'est pas atteint et le conducteur en ressent la conséquence.

La non prise en compte de cette saturation implique un fonctionnement dégradé du dispositif de contrôle. En effet, ne pas tenir compte de celle-ci revient à faire l'hypothèse que le moteur peut toujours délivrer une puissance élevée. Or, tout moteur thermique possède des limitations en couple du fait de sa limitation en puissance. Ne pas en tenir compte rend le contrôle fragile, dégrade la prestation sur des fortes charges, et limite les performances du véhicule.

La présente invention vise à éviter l'entrée en saturation du mot eur t her mique.

Dans ce but, elle propose en ce que la référence de couple à la roue soit corrigée en cas de saturation du moteur thermique, de manière à éviter l'entrée en saturation du moteur.

De préférence, la référence de couple à la roue est corrigée en fonction d'une valeur instantanée de saturation de couple et d'un vecteur contenant une estimation de l'état de la transmission dans son ensemble, en interaction avec le moteur thermique et les roues.

Selon un mode de réalisation particulier de l'invention, ce vecteur contient au moins une estimation du régime moteur, du couple à la roue, des régimes des machines électriques, du couple appliqué en entrée de boîte, de la vitesse aux roues, du couple de frottement du moteur thermique, ou du couple de frottement à la roue.

L'invent ion concerne aussi un disposit if de contrôle d'une transmission présentant une unité d'anti-saturation du couple du moteur thermique capable de corriger une référence de couple aux roues.

D'autres caractéristiques et avantages de la présente invention, apparaîtront clairement à la lecture de la description suivante d'un mode de réalisation non limitatif de celle-ci, en se reportant aux dessins annexés, sur lesquels :

- la figure 1 est un schéma type de transmission infiniment variable auquel s'applique l'invention, et
- la figure 2 montre la structure du contrôle mécanique mis en oeuvre

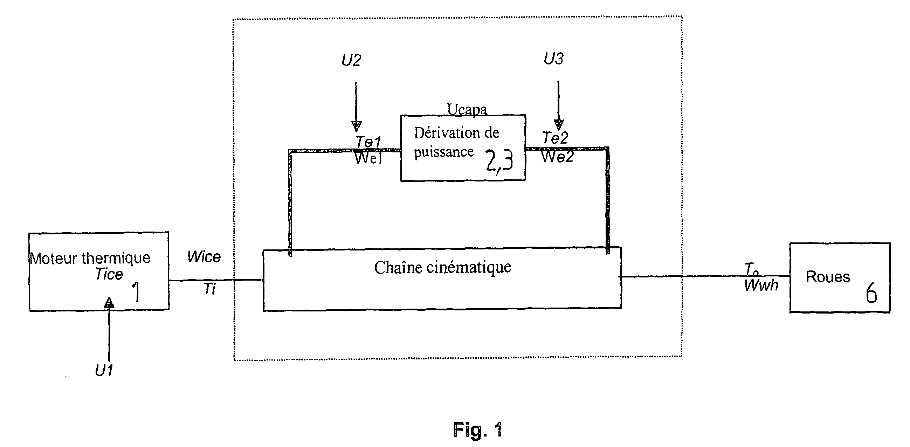

Sur la figure 1, on a représenté schématiquement une transmission infiniment variable à variateur électrique présentant deux voies parallèles de transmission de puissance entre le moteur thermique 1 et les roues 6, telle que décrite dans la publication FR 2 823 281, à laquelle on pourra se reporter. La voie de puissance principale comporte une chaîne cinématique à démultiplication fixe, et la voie dite de dérivation de puissance inclut les deux machines électriques 2, 3 constituant le variateur. Sur le schéma, on a mentionné des grandeurs physiques explicitées ci-dessous : Tice, Ti, Wice, Te1, Te2, We1, We2, To, Wwh, et Tres.

Ces grandeurs physiques caractérisant le comportement global du GMP équipé de sa transmission infiniment variable à variateur électrique, mentionnées sur les schémas sont les suivant es.

Au niveau du mot eur thermique :

- Tice : couple moteur appliqué sur le vilebrequin,
- Wice : régime mot eur

Au niveau du volant amortisseur :

- Ti : couple appliqué en entrée de boîte,
- Wi : régime en sortie du volant,

Au niveau de la dérivation de puissance :

- Te1 : couple de la première machine électrique 2
- We1 : régime de la première machine électrique 2
- Te2 : couple de la deuxième machine électrique 3
- We2 : régime de la deuxième machine électrique 3
- Ucapa : tension aux bornes de l'élément de stockage énergétique

Au niveau du différentiel

- Wo : régime en sortie de la chaîne cinématique
- To : couple à la roue

Au niveau de la roue :

- Wwh : vit esse des roues

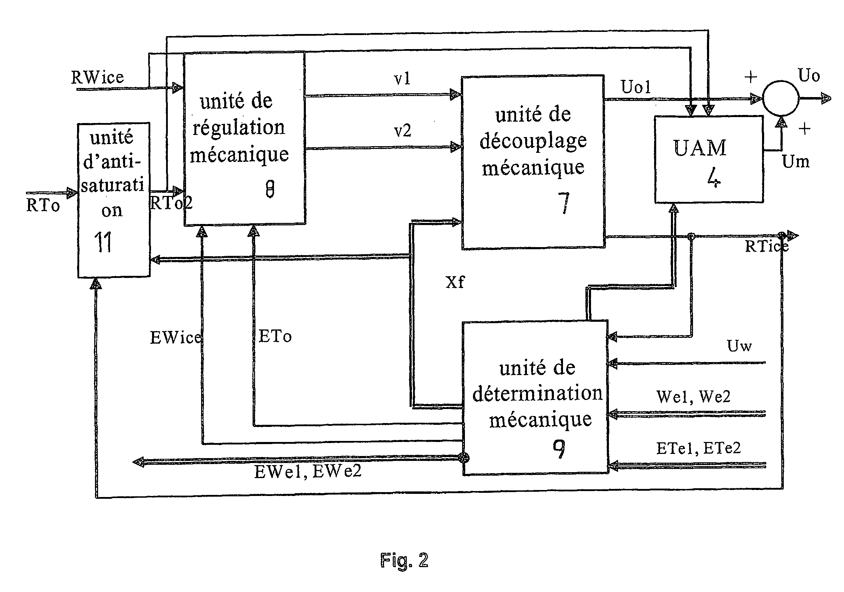

La transmission est placée sous le contrôle d'un système de contrôle regroupant un dispositif de contrôle mécanique, décrite sur la figure 2, qui assure les objectifs mécaniques, à savoir la régulation du couple aux roues To, et du régime du mot eur t her mique W ice.

L'objectif énergétique est assuré par ailleurs par une unité de contrôle énergétique non décrite, dont seuls les signaux sortants interagissant avec le contrôle mécanique sont ment ionnés :

- Uw : commande énergétique qui s'exprime en f onct i on de Te1, Te2, We1 et We2,
- ETe1 : estimation du couple de la première machine électrique,
- ETe2 : estimation du couple de la deuxième machine électrique

Conformément à l'invention, l'unité de contrôle mécanique est elle même composée de cinq unités ou modules, regroupés sur la figure 2, avec les différents signaux qui leur sont associés : une unité de détermination mécanique 9, une unité de régulation mécanique 8, une unité de découplage mécanique 7, une unité d'amortissement des modes de torsion 4, et une unité d'antisaturation 11.

L'unité de détermination mécanique 9 a pour fonction de fournir l'état du système aux autres unités de contrôle mécanique. A cet effet, elle exploite les mesures de régime We1, We2 des machines électriques 2, 3, ainsi que la commande énergétique Uw, qui s'exprime en fonction des couples respectifs ETe1, ETe2, de ces machines. L'unité 9 exploite aussi un signal RTice, issu de l'unité de découplage mécanique et qui représente la consigne de couple moteur envoyée au calculateur du moteur thermique.

A partir de ces mesures et signaux, l'unité de détermination mécanique calcule les grandeurs suivantes :

- ■ EWice : estimation du régime moteur,
- ■ ETo : estimation du couple à la roue,
- ■ EWe1 et EWe2 : estimations des régimes des machines élect r iques, et
- ■ un vecteur d'estimation Xf, qui comprend les est imat ions précédentes, ainsi que ETi estimation du couple Ti échangé entre le moteur et la boîte, une estimation de la vitesse aux roues EWwh, une estimation du couple de frottement moteur thermique Etdice, et une estimation du couple de frottement à la roue ETres.

Finalement, le vecteur Xf regroupe les signaux suivants :

$$Xf = [EWice, EWwh, EWe1, EWe2, ETi, ETo, ETdice, ETres].$$

Conformément à l'invention, le vecteur Xf contient au moins une estimation du régime moteur EWice, du couple à la roue ETo, des régimes des machines électriques EW1 et EW2, du couple appliqué en entrée de boîte ETi, de la vitesse aux roues EWwh, du couple de frottement du moteur thermique ETdice, ou du couple de frottement à la roue Etres. Il contient une estimation de l'état de la transmission dans son ensemble, en interaction avec le moteur thermique et les roues. Cette estimation est à destination des autres unités du contrôle mécanique.

Le calcul de l'ensemble de ces estimations est rendu possible grâce aux techniques connues d'observat ion et d'est imat ion des systèmes dynamiques, et se base sur un modèle mathématique usuel du comportement dynamique du groupe motopropulseur.

L'unit é de régulat ion mécanique 8 calcule deux signaux de commande intermédiaires v1 et v2, à partir des références de régime moteur RWice, de couple à la roue RTo, des estimations de régime mot eur EWice et de couple à la roue (ETo) :

■ Le signal v1 est calculé par un régulateur à partir de la consigne de régime thermique RWice et de l'estimation du régime thermique EWice
■ Le signal v2 est aussi calculé par un régulateur à partir de la consigne de couple aux roues RTo et de l'estimation du couple aux roues ETo.

Les paramètres de ces deux régulateurs sont des paramètres de réglage de l'unité de régulation mécanique, qui déterminent le degré de performance du suivi des consignes RWice et RTo par les grandeurs Wice et To.

L'unité de découplage mécanique 7, calcule une commande Uo1 et une consigne RTice de couple moteur thermique à partir des commandes intermédiaires v1 et v2 et du vecteur d'estimation Xf issu de l'unité de détermination mécanique.

L'unité d'amortissement des modes de torsion 4 (UAM), calcule un complément de commande Um qui s'ajoute à Uo1. Um dépend des signaux RWice, RTo et du vecteur Xf. Le complément de commande Um est destiné à amortir les modes oscillants engendrés par les raideurs. Cette commande vient s'ajouter à la commande Uo1, calculée par l'unit é de découplage mécanique, pour obtenir la commande finale Uo calcule un La commande Uo1 est convertie en couples électriques de commande Te1 et Te2.

Enf in, le dispositif de contrôle mécanique comporte une unité d'anti-saturation 11 du couple du moteur thermique, qui va corriger la consigne de couple aux roues RTo, à partir de la référence RTice et du vecteur Xf , de façon à ne plus saturer le couple moteur. Grâce à cette unité, la référence de couple à la roue RTo est corrigée en cas de saturation du moteur thermique, de manière supprimer cette saturation.

Le fonctionnement de cette unité est le suivant. Lorsque le moteur thermique rentre en saturation, cela signifie que le point de fonctionnement courant de la transmission Rwice, To induit une puissance mot eur trop importante, qui entraîne une saturation de couple RTice. Conformément à l'invention, la stratégie développée grâce à l'unité d'anti-sat uration consiste à

- détecter la saturation du couple moteur, par rapport à un seuil de saturation RTice_max
- s'il n'y a pas de saturation (RTice < RTice_max), la consigne de couple envoyée aux roues RTo2 n'est pas corrigée, et reste la référence RTo du point de fonctionnement courant
- s'il y a saturation (TRice > RTice_max), adapter la consigne RTo2 sur la base d'un bilan de puissance de la transmission. La référence de couple à la roue (RTo) est corrigée en fonction d'une valeur instantanée de saturation de couple RTice et d'un vecteur Xf contenant une estimation de l'état de la transmission dans son ensemble, en interaction avec le moteur thermique et les roues.

Ainsi, référence de couple à la roue RTo peut être corrigée en fonction d'une valeur instantanée de saturation de couple RTice et d'un vecteur Xf contenant une estimation de l'état de la transmission dans son ensemble, en interaction avec le moteur thermique et les roues. La valeur instantanée de saturation de couple RTice est comparée à un seuil RTice_max.

Si RTice est supérieur à RTice_max, la consigne de couple aux roues RTo2 est recalculée à partir de la référence RTo pour assurer une puissance à la roue inférieure ou égale à la puissance fournie par le moteur thermique.

La puissance fournie par le mot eur peut être estimée par l'unité de détermination mécanique en appliquant un gain d'adaptation G inférieur à un, recalculé à chaque instant, à la puissance fournie par le mot eur thermique : Puissance _roue = G * Puissance_moteur.

La puissance à la roue (couple multiplié par la vitesse) est RTo2 * EWwh (estimation de la vitesse aux roues). La puissance maximum du moteur est [ RTice_max * EWice ] - [ ETdice * EWice], représentant la différence entre une puissance nominale que peut att eindre le moteur et une estimation de la puissance dissipée par les frottements dans la transmission. La puissance maximum du moteur prise en compte est donc la différence entre une puissance nominale que peut atteindre le moteur et une est imat ion du frottement dans la transmission.

Conformément à l'invention, lorsque la saturation est dét ect ée, la nouvelle consigne de couple aux roues RTo2 peut être calculée de la façon suivant e :

- initialisation du gain G selon une formule du type :

$$G = 0.9 * EWh * RTo / EWice * RTice\_max,$$

G représentant un pourcentage calibrable du rapport de puissance entre les roues et le moteur,
- calcul proprement dit de RTo2 selon un principe de bilan de puissance entre les roues et le moteur tel que :

$$RTo2 = G * [ (RTice\_max * EWice) - ( ETdice * EWice) ] / EWwh$$

En résumé, le calcul de la consigne de couple aux roues RTo2 comporte des étapes d'initialisation du gain (G) et de calcul proprement dit de RTo2 selon un principe de bilan de puissance entre les roues et le moteur.

Enfin, si le précédent calcul ne supprime pas la saturation de couple, alors G peut être adapté en étant diminué arbitrairement d'une valeur calibrable faible, telle que 0,001.

**Revendications**

1. Procédé de contrôle d'une transmission infiniment variable à variateur électrique, comportant un moteur thermique (1) et au moins deux machines électriques (2, 3), reposant sur le calcul d'un point de f onct ionnement instantané de la transmission défini par une référence de régime du mot eur thermique (RWice) et une référence de couple à la roue (RTo), **caractérisé en ce que** la référence de couple à la roue (RTo) est corrigée en cas de saturation du moteur thermique, de manière supprimer cette saturation.

2. Procédé de contrôle selon la revendication 1, **caractérisé en ce que** la référence de couple à la roue (RTo) est corrigée en fonction d'une valeur instantanée de saturation de couple (RTice) et d'un vecteur (Xf) contenant une estimation de l'état de la transmission dans son ensemble, en interaction avec le mot eur thermique et les roues.

3. Procédé de contrôle selon la revendication 2, **caractérisé en ce que** le vecteur contient au moins une estimation du régime moteur (EWice), du couple à la roue (ETo), des régimes des machines électriques (EW1) et (EW2), du couple appliqué en entrée de boîte (ETi), de la vitesse aux roues (EWwh), du couple de frottement du moteur thermique (ETdice), ou du couple de frottement à la roue (Et res).

4. Procédé de contrôle selon la revendication 2 ou 3, **caractérisé en ce que** la valeur instantanée de saturation de couple (RTice) est comparée à un seuil (RTice_max).

5. Procédé de contrôle selon la revendicat ion 4, **caractérisé en ce que** si (RTice) est supérieur à (RTice_max), la consigne de couple aux roues (RTo2) est recalculée à partir de la référence (RTo) pour assurer une puissance à la roue inférieure ou égale à la puissance fournie par le mot eur thermique.

6. Procédé de contrôle selon la revendication 5, **caractérisé en ce que** la puissance à la roue est estimée en appliquant un gain d'adaptation (G) inférieur à un, recalculé à chaque instant, à la puissance fournie par le moteur thermique.

7. Procédé de contrôle selon la revendication 6, **caractérisé en ce que** la puissance maximum du moteur prise en compte est la différence entre une puissance nominale que peut atteindre le moteur et une estimation du frottement dans la transmission.

8. Procédé de contrôle selon la revendication 6 ou 7, **caractérisé en ce que** le calcul de la consigne de couple aux roues (RTo2) comporte des étapes d'initialisation du gain (G) et de calcul proprement dit de (RTo2) selon un principe de bilan de puissance entre les roues et le moteur.

9. Procédé de contrôle selon la revendication 8, **caractérisé en ce que** si le calcul précédent ne supprime pas la saturation de couple, le gain (G) est choisi arbitrairement.

10. Dispositif de contrôle d'une transmission assurant la régulation du couple aux roues (To) et du régime thermique (Wice) d'une transmission infiniment variable à variateur électrique comportant un moteur thermique (1) et au moins deux machines électriques (2, 3), **caractérisé en ce qu'**il présente une unité d'anti-saturation (11) du couple du moteur thermique capable de corriger une référence de couple aux roues (RTo).

11. Disposit if de contrôle selon la revendication 11, **caractérisé en ce que** l'unité d'anti-saturation (11) transmet une consigne de couple aux roues corrigée (RTo2), à une unité de régulation mécanique (8) qui calcule des commandes intermédiaires (v1, v2) à partir de la consigne de couple corrigée (RTo2) et d'une référence de régime moteur (RWice).

12. Dispositif de contrôle selon la revendication 11, **caractérisé en ce qu'**il comporte une unité de découplage mécanique (7) qui calcule une commande (Uo) des machines électriques (2, 3) et une consigne de couple (RTice) du moteur thermique (1).

13. Dispositif de contrôle selon la revendication 12, **caractérisé en ce qu'**il comporte une unité d'amortissement des modes de torsion (4) qui fournit un complément de commande (Um) ajouté à la consigne de commande (Uo1) pour amortir des modes oscillants engendrés par les raideurs de la transmission.

## Claims

1. Method for controlling an infinitely variable transmission with an electric variator, comprising an internal combustion engine (1) and at least two electric machines (2, 3), that relies upon calculating an instantaneous operating point of the transmission as defined by an internal combustion engine speed reference (RWice) and a wheel torque reference (RTo) pertaining to torque at the wheel, **characterized in that** the wheel torque reference (RTo) is corrected if the internal combustion engine becomes saturated, so as to eliminate this saturation.

2. Control method according to Claim 1, **characterized in that** the wheel torque reference (RTo) is corrected as a function of an instantaneous torque saturation value (RTice) and of a vector (Xf) containing an estimate of the state of the transmission in its entirety, in conjunction with the internal combustion engine and the wheels.

3. Control method according to Claim 2, **characterized in that** the vector contains at least one estimate of the engine speed (EWice), of the wheel torque (ETo), of the speeds of the electric machines (EW1) and (EW2), of the gearbox input torque (ETi), of the wheel speed (EWwh), of the internal combustion engine frictional drag torque (ETdice), or of the wheel frictional drag torque (Etres).

4. Control method according to Claim 2 or 3, **characterized in that** the instantaneous torque saturation value (RTice) is compared with a threshold (RTice_max).

5. Control method according to Claim 4, **characterized in that** if (RTice) is greater than (RTice_max), the wheel torque setpoint (RTo2) is recalculated from the reference (RTo) in order to ensure that the power at the wheel is less than or equal to the power supplied by the internal combustion engine.

6. Control method according to Claim 5, **characterized in that** the power of the wheel is estimated by applying a matching gain (G) less than one, recalculated at each instant, to the power supplied by the internal combustion engine.

7. Control method according to Claim 6, **characterized in that** the maximum engine power taken into consideration is the difference between a nominal power that the engine can achieve and an estimate of the frictional drag in the transmission.

8. Control method according to Claim 6 or 7, **characterized in that** calculation of the wheel torque setpoint (RTo2) involves steps of initializing the gain (G) and of actually calculating (RTo2) using a principal of power balance between the wheels and the engine.

9. Control method according to Claim 8, **characterized in that** if the aforementioned calculation does not eliminate torque saturation, the gain (G) is chosen arbitrarily.

10. Device for controlling a transmission that regulates the torque at the wheels (To) and the combustion engine speed (Wice) of an infinitely variable transmission with electrical variator comprising an internal combustion engine (1) and at least two electric machines (2, 3), **characterized in that** it has a combustion engine torque antisaturation unit (11) capable of correcting a wheel torque reference (RTo).

11. Control device according to Claim 11, **characterized in that** the antisaturation unit (11) transmits a corrected wheel torque setpoint (RTo2) to a mechanical regulating unit (8) which calculates intermediate commands (v1, v2) from the corrected torque setpoint (RTo2) and from an engine speed reference (RWice).

12. Control device according to Claim 11, **characterized in that** it comprises a mechanical decoupling unit (7) which calculates a command (Uo) for the electric machines (2, 3) and a torque setpoint (RTice) for the internal combustion engine (1).

13. Control device according to Claim 12, **characterized in that** it comprises a torsion mode damping unit (4) which supplies a command compliment (Um) added to the command setpoint (Uo1) to damp the oscillating modes that are introduced by the stiffness in the transmission.

**Patentansprüche**

1. Verfahren zur Steuerung eines unendlich veränderbaren Getriebes mit elektrischem Versteller, welches einen Wärmekraftmotor (1) und mindestens zwei elektrische Maschinen (2, 3) aufweist, das auf der Berechnung eines augenblicklichen Arbeitspunkts des Getriebes beruht, der durch eine Drehzahlreferenz des Wärmekraftmotors (RWice) und eine Drehmomentreferenz am Rad (RTo) definiert wird, **dadurch gekennzeichnet, dass** die Drehmomentreferenz am Rad (RTo) im Fall einer Sättigung des Wärmekraftmotors korrigiert wird, um diese Sättigung zu beseitigen.

2. Steuerungsverfahren nach Anspruch 1, **dadurch gekennzeichnet, dass** die Drehmomentreferenz am Rad (RTo) in Abhängigkeit von einem Drehmomentsättigung-Augenblickswert (RTice) und von einem Vektor (Xf) korrigiert wird, der eine Schätzung des Zustands des Getriebes in seiner Gesamtheit in Wechselwirkung mit dem Wärmekraftmotor und den Rädern enthält.

3. Steuerungsverfahren nach Anspruch 2, **dadurch gekennzeichnet, dass** der Vektor mindestens eine Schätzung der Motordrehzahl (EWice), des Drehmoments am Rad (ETo), der Drehzahlen der elektrischen Maschinen (EW1) und (EW2), des an den Getriebeeingang angewendeten Drehmoments (ETi), der Geschwindigkeit an den Rädern (EWwh), des Reibungsmoments des Wärmekraftmotors (ETdice), oder des Reibungsmoments am Rad (Etres) enthält.

4. Steuerungsverfahren nach Anspruch 2 oder 3, **dadurch gekennzeichnet, dass** der Drehmomentsättigung-Augenblickswert (RTice) mit einem Schwellwert (RTice_max) verglichen wird.

5. Steuerungsverfahren nach Anspruch 4, **dadurch gekennzeichnet, dass**, wenn (RTice) größer ist als (RTice_max), der Drehmomentsollwert an den Rädern (RTo2) ausgehend von der Referenz (RTo) neu berechnet wird, um eine Leistung am Rad geringer als die oder gleich der vom Wärmekraftmotor gelieferten Leistung zu gewährleisten.

6. Steuerungsverfahren nach Anspruch 5, **dadurch gekennzeichnet, dass** die Leistung am Rad geschätzt wird durch Anwenden einer Anpassungsverstärkung (G) geringer als eins, die in jedem Augenblick neu berechnet wird, an die vom Wärmekraftmotor gelieferte Leistung.

7. Steuerungsverfahren nach Anspruch 6, **dadurch gekennzeichnet, dass** die maximale berücksichtigte Leistung des Motors die Differenz zwischen einer Nennleistung, die der Motor erreichen kann, und einer Schätzung der Reibung im Getriebe ist.

8. Steuerungsverfahren nach Anspruch 6 oder 7, **dadurch gekennzeichnet, dass** die Berechnung des Drehmomentsollwerts an den Rädern (RTo2) Schritte der Initialisierung der Verstärkung (G) und der eigentlichen Berechnung von (RTo2) gemäß einem Leistungsbilanzprinzip zwischen den Rädern und dem Motor aufweist.

9. Steuerungsverfahren nach Anspruch 8, **dadurch gekennzeichnet, dass**, wenn die vorhergehende Berechnung die Drehmomentsättigung nicht beseitigt, die Verstärkung (G) willkürlich gewählt wird.

10. Steuervorrichtung eines Getriebes, die die Regulierung des Drehmoments an den Rädern (To) und der Wärmedrehzahl (Wice) eines unendlich veränderbaren Getriebes mit elektrischem Versteller gewährleistet, das einen Wärmekraftmotor (1) und mindestens zwei elektrische Maschinen (2, 3) aufweist, **dadurch gekennzeichnet, dass** sie eine Einheit (11) zur Verhinderung der Sättigung des Drehmoments des Wärmekraftmotors aufweist, die in der Lage ist, eine Drehmomentreferenz an den Rädern (RTo) zu korrigieren.

11. Steuervorrichtung nach Anspruch 11, **dadurch gekennzeichnet, dass** die sättigungsverhindernde Einheit (11) einen korrigierten Drehmomentsollwert an den Rädern (RTo2) an eine mechanische Regulierungseinheit (8) überträgt, die Zwischensteuerungen (v1, v2) ausgehend von dem korrigierten Drehmomentsollwert (RTo2) und von einer Motordrehzahlreferenz (RWice) berechnet.

12. Steuervorrichtung nach Anspruch 11, **dadurch gekennzeichnet, dass** sie eine mechanischen Entkopplungseinheit (7) aufweist, die eine Steuerung (Uo) der elektrischen Maschinen (2, 3) und einen Drehmomentsollwert (RTice) des Wärmekraftmotors (1) berechnet.

13. Steuervorrichtung nach Anspruch 12, **dadurch gekennzeichnet, dass** sie eine Dämpfungseinheit der Torsionsmodi (4) aufweist, die eine Steuerungsergänzung (Um) liefert, die zum Steuersollwert (Uo1) hinzugefügt wird, um Schwingungsmodi zu dämpfen, die von den Steifigkeiten des Getriebes erzeugt werden.

EP 1 831 046 B1

Fig. 1

Fig. 2

RWice

unité de régulation mécanique 8

v1

v2

unité de découplage mécanique 7

Uo1

UAM 4

+ Uo

+ Um

unité d'anti-saturation 11

RTo

RTo2

Xf

RTice

EWice

ETo

unité de détermination mécanique 9

Uw

We1, We2

ETe1, ETe2

EWe1, EWe2

EP 1 831 046 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004106100 A
- FR 2823281